# EUROPEAN PATENT APPLICATION

(11) **EP 3 813 170 A1**
(43) Date of publication of application: **28.04.2021**
(21) Application number: 19792266.9
(22) Date of filing: 23.04.2019
(51) Int. Cl.: H01M 8/18

(54) **STACK FRAME FOR FLOW BATTERY**

(30) Priority: 27.04.2018 CN 201810391609
(71) Applicant: Jiangsu Transuniverse Power Co., Ltd, Nantong, Jiangsu 226399 (CN)
(72) Inventor: ZU, Ge, Chengdu, Sichuan 610051 (CN); WANG, Jin, Chengdu, Sichuan 610051 (CN); ZHENG, Xiaohao, Chengdu, Sichuan 610051 (CN)
(74) Representative: Perani & Partners S.p.A.
(86) International application number: PCT/CN2019/083827
(87) International publication number: WO 2019/206119

(57) **Abstract**

The present disclosure relates to a stack frame for a flow battery, wherein the stack frame is made of a polymer material and has a hollow structure, and an outer shape thereof has a horizontally and/or longitudinally symmetrical structure; the stack frame has a front side and a back side; a surface of the front side has: an inlet and an outlet of electrolyte; an electrolyte guiding groove; and a sealing gasket groove; the electrolyte guiding groove and the sealing gasket groove do not communicate with each other, and the electrolyte guiding groove is at least partially exposed to the surface of the front side of the stack frame, and the electrolyte guiding groove allows the electrolyte to flow in or out of graphite felts on both sides of a bipolar plate or both sides of a separator of the flow battery.

## Description

### TECHNICAL FIELD

The present disclosure belongs to the field of flow batteries, and specifically to the field of preparation of flow battery components.

### BACKGROUND

Electric power has always been regarded as an instantaneous source of energy that is instantaneously generated and supplied. For decades, the power grid has formed a power supply system based on fossil fuel power generation (commonly known as thermal power) (accounting for 60% of the total power generation). The power supply system primarily regulates the driving of thermal energy to mechanical energy and varies the output efficiency of generators by controlling the combustion of coal, oil, natural gas and other materials, so as to immediately respond to the demand for the power grid load.

Since the 1990s, the construction of reservoir-type hydroelectric power plants has effectively reduced the dependence of the power grid on fossil fuel power generation. Through the control of reservoir water level, hydropower may also immediately respond to the changing power grid load as with a thermal power unit. Meanwhile, during the off-peak period of the power grid load, it is possible to pump water from a low-level water source to a high-level reservoir, so that the remaining power of the power grid may be stored in the form of gravitational potential energy and reserved for peak use.

Since the beginning of this century, a new generation of renewable energy system dominated by solar power generation and wind power generation has been widely accepted as a more scientific solution for energy supply. Compared with the conventional power grid dominated by thermal power and supplemented by hydropower, the new clean energy represents the future of energy. However, its major disadvantage is the intermittency of the source of energy. A new clean energy-dominated power generation grid will inevitably have a serious mismatch between power generation peaks/valleys and the power grid load, resulting in a lot of power wasted during the on-peak power generation and a large-scale power shortage during the off-peak power generation.

To truly realize the clean energy of the whole power grid, there is a need to accomplish energy storage of the whole power grid. With high-efficiency energy storage units equipped at the power generation end to realize the rapid access of electric energy locally, it is possible to collect waste electricity in a low-load state of the power grid and to release stored electricity in a high-load state to turn it into treasure. In terms of power transmission and distribution, energy storage stations are set up to participate in grid peak shaving, so that the power distribution efficiency is improved, the power transmission congestion is relieved, and the upgrade of power transmission and distribution is postponed. At the user end, not only are the energy storage stations used as a backup power supply, but also charging from the power grid is done during low-price hours and discharging from the energy storage system is done during high-price hours, to achieve a plurality of demands such as time-of-use electricity cost management, an increase in photovoltaic self-consumption, on-demand power supply and electricity cost saving. At the same time, a dual peak clipping and valley filling of power generation and load is carried out on a power supplier and a power consumer, which significantly improves the utilization efficiency of the power grid.

Flow battery technology boasts the natural advantages of large-scale energy storage: the level of electricity storage quantity is linearly proportional to the volume of the electrolyte, and the charge-discharge power is determined by the size and number of stacks, so it is possible to devise, as required, a flow battery having the charge-discharge power ranging from a kW level to an MW level and having different energy storage volumes allowing for continuous discharging for 1 hour to several days. Electrolyte formed of general inorganic acids or inorganic salts has stable chemical components, convenient storage, little influence on the environment, extremely low self-discharge coefficient, suitability for long-term electric energy storage, and extremely high safety performance. Due to its stable and reliable charge-discharge cycle, there is no upper limit to the theoretical number of charge-discharge cycles.

At present, most of the products from flow battery companies worldwide still remain in demonstration projects for grid-level energy storage, far from meeting the requirements for reliability and stability of commercial products, and their main technical bottleneck consists in the key component -- stack -- of the battery. Due to the design flaw of stacks, the limitations of the mechanical properties of stack materials, and the need to balance the battery conversion efficiency and the internal cycle stability of the electrolyte, the stack life may only reach 1000 to 3000 times, which greatly increases the cost per kilowatt-hour of energy storage. How to produce a stable and high-efficiency stack capable of charging and discharging for a long time is a difficult problem faced with flow battery enterprises.

During the production of a general stack, the essential components, i.e., a graphite bipolar plate, graphite felts and a separator, inside the stack are laminated in this sequence, and then single cells are connected in series to form a stack. After sealing and assembling, positive and negative electrolytes are introduced for charge-discharge cycles. When assembling and laminating internal components, there is a need to introduce an auxiliary frame structure, which is used mainly to provide a flow groove for the electrolyte to circulate inside the stack so as to ensure its smooth flow without blockage, and to ensure no displacement of the components when assembled so that the corresponding positions of each part are guaranteed to be aligned; meanwhile, the auxiliary structure has a sealing effect on each single cell, so that the electrolyte is guaranteed not to leak; and a certain internal pressure in the stack is maintained so that the contact resistance between the components is minimized, thereby improving the energy conversion efficiency of the stack. In available mainstream technologies of stacks, the design of the flow groove is mainly achieved by sealing gaskets.

It is a very "natural" solution to realize the sealing and the flow guide groove by sealing gaskets, which has the advantages of simple design, low cost, etc., and has become a mainstream design scheme for the stack of a flow battery. However, the material for the sealing gasket generally includes silicone rubber, fluorine rubber, butyl rubber, EPDM, etc., which are self-expansible to some extent, and are liable to be aged and corroded during their long-term contact with the electrolyte of the flow battery, thereby affecting the service life of the flow battery.

Citation Literature 1 discloses a flow-cell electric-pile sealing structure, comprising a sealing rubber formed by connecting several sealing gaskets through a sealing line, wherein the sealing gasket is provided with a common flow channel opening for electrolyte, and the sealing gasket is provided with a compressive deformation structure on one side, and an annular convex structure on the other side. The said sealing gasket seals the common flow channel opening for electrolyte of the separator and the periphery thereof. The separator side is sealed in a linear sealing manner that is embedded inside and outside to achieve double protection. The position of the common flow channel for electrolyte is sealed in a face sealing manner to achieve prevention of the internal and external leakage, but the electrolyte is still in direct contact with the sealing rubber.

Citation Literature 2 discloses an electrode frame structure of flow battery pile, with an additional flow channel for electrolyte disposed on a rectangular plate, wherein one end of the additional flow channel for electrolyte is connected to a through hole of an electrolyte inlet, while the other end is connected to a cavity that may accommodate the electrodes. Its electrode frame structure improves the concentration distribution in the electrodes and improves the battery performance. Although it does not mention the relationship between the electrolyte diversion groove and the sealing member, it can be seen from the structural diagram that the inflow and outflow of the electrolyte still rely on the diversion groove formed by the sealing member.

Citation Literature 3 provides a bipolar plate for flow battery and a flow battery pile, the bipolar plate for flow battery includes a fixed frame and a diversion guide frame that are attached to each other. The fixed frame is a frame structure. A conductive plate is arranged inside the fixed frame, and at least two of first through holes are arranged around the fixed frame. The diversion frame is a frame structure. A separator is arranged inside the diversion frame, and the edge of the separator is fixed to the diversion frame. By separately arranging the first through hole and the second through hole allowing the electrolyte to pass through, neither of them will pass through the separator, and the separator is fixed by the diversion frame. When flowing through the first through hole and the second through hole, the electrolyte is not in contact with either of the separator and the conductive plate, which will not damage the separator and the conductive plate, extending the service life of the separator and the conductive plate. Also, the fixed frame and the diversion frame are very hard and not easily damaged. Although Citation Literature 3 does not directly disclose the relationship between the electrolyte and the sealing rubber, two different frames are required for fixing the separator and the conductive plate, so the ease of assembly is inadequate.

Citation Literature 4 discloses an electric pile structure of a flow battery, comprising a repeatedly stacked unit cell formed by laminating a guide plate, a bipolar plate and a guide plate in this order, and a separator, wherein the electric pile structure is devoid of a sealing gasket, and the side of the electric pile, which is perpendicular to the plane where the bipolar plate is located, is encapsulated by an encapsulating end plate. In spite of no use of a sealing structure in the electric pile, an individual guide plate is used to guide the flow, and a bipolar plate and two guide plates are connected by means of injection molding, bonding, welding, chemical bonding, etc. to form a seamless structural unit, in which electrodes are installed to constitute a unit cell. Hence, the structure is complicated, and there are concerns about reliability in use.

In view of the above, the basic situations of the prior art show that there still remains room for further improvements over the simplicity of the stack frame and the rationality of the structural design.
Citation Literature 1: CN106374129A
Citation Literature 2: CN206225462U
Citation Literature 3: CN204516844U
Citation Literature 4: CN107123824A

### SUMMARY

### Problems to be solved by the Invention

The so-called flow battery is, above all, to ensure an unimpeded flow of liquid electrolyte inside the battery. In the design of an ordinary stack for flow batteries, the rubber gasket has two fatal shortcomings. One is poor oxidation resistance. After long-term contact with an electrolyte, the rubber gasket will undergo volume expansion, causing the internal space of a flow groove to be squeezed, which affects the flow of electrolyte in the groove. More seriously, this will block the flow groove, resulting in an overcharge of the whole battery, so that the battery scraps. The other shortcoming is an inherent elasticity of the rubber gasket. When assembling a stack, it is hard to guarantee that the areas of each cell are uniformly stressed, which leads to poor uniformity of an electrolyte guiding groove, directly resulting in uneven velocity distribution of positive and negative electrolytes in different cells in the flow groove. As a result, some cells at a low flow rate may be overcharged, causing plenty of gas to be generated, such that a conductive graphite felt plate and a bipolar plate are corroded and disintegrated. Finally, the interior of the battery is blocked and the battery scraps.

In view of the above problems of the prior art, the present disclosure provides a stack frame for a flow battery having: an inlet and an outlet of electrolyte; an electrolyte guiding groove; and a sealing gasket groove, wherein the electrolyte guiding groove communicates independently with the inlet and the outlet respectively, and allows the electrolyte to flow in or out of graphite felts on both sides of a bipolar plate or both sides of a separator via the electrolyte guiding groove. In the stack frame, the electrolyte guiding groove and the sealing gasket groove do not communicate with each other, thereby overcoming the problems about structural damage, blockage of electrolyte runners, and uneven velocity distribution of positive and negative electrolytes in different cells as a result of ageing, corrosion and volume expansion of sealing rubber in conventional stack frames.

### Solution to Problems

After diligent studies, the present inventors propose the following technical solution to address the aforementioned technical problems:
The present disclosure provides, for the first time, a stack frame for a flow battery, wherein the stack frame is made of a polymer material and has a hollow structure, and an outer shape thereof has a horizontally and/or longitudinally symmetrical structure,
the stack frame has a front side and a back side, the surface of the front side has:
   an inlet and an outlet of electrolyte;
   an electrolyte guiding groove; and
   a sealing gasket groove;
   the electrolyte guiding groove and the sealing gasket groove do not communicate with each other, and the electrolyte guiding groove is at least partially exposed to the surface of the front side of the stack frame, and
   the electrolyte guiding groove allows the electrolyte to flow in or out of graphite felts on both sides of a bipolar plate or both sides of a separator of the flow battery.

The stack frame according to the above aspect, the electrolyte guiding groove is symmetrically distributed on two side frames of the front side of the stack frame, and on either of the side frames, the electrolyte guiding groove includes a portion (a) connected to the inlet or the outlet, and a portion (b) not connected to the inlet or the outlet.

The stack frame according to the above aspect, on either of the side frames of the stack frame, the portion (a) intersects with the sealing gasket groove, and has through holes respectively on both sides of an intersection, so that the portion (a) is divided by the intersection into a portion (a1) and a portion (a2); and the portion (a1) and the portion (a2) are connected to the through holes on both sides of the intersection respectively, and the portion (a2) further communicates with graphite felts on both sides of the bipolar plate or both sides of the separator.

The stack frame according to the above aspect, the distance between the through holes on both sides of the intersection matches a length of the portion (b).

The stack frame according to any one of the above aspects, both the front side and the back side of the stack frame have a horizontally and/or longitudinally symmetrical structure relative to a center line.

The stack frame according to any one of the above aspects, the stack frame is a frame bearing the bipolar plate and the graphite felts or a frame bearing the separator and the graphite felts.

The stack frame according to any one of the above aspects, the stack frame only allows the electrolyte to flow in and out of graphite felts on both sides of the bipolar plate or both sides of the separator via the electrolyte guiding groove.

Besides, the present disclosure further relates to a stack frame laminate for a flow battery, wherein the stack frames according to any one of the above aspects are laminated by the following method in such a manner that the front sides face the same direction: using one of the stack frames as a reference, and laminating an additional stack frame by rotating it by 180° in a parallel manner.

Furthermore, the present disclosure further relates to a flow battery stack, comprising one or more stack frames according to any one of the above aspect, or the stack frame laminate according to the above aspect.

In addition, the present disclosure further relates to a flow battery, comprising the stack according to the above aspect.

### Effects of the Invention

The technical solution according to the present disclosure is capable of achieving the following technical effects:
(1) In the design of the stack frame of the present disclosure, the positive and negative electrolyte, when circulated, is not in contact with the sealing rubber, thus getting rid of degradation of physical and mechanical properties of the sealing rubber due to its long-term contract with the electrolyte.
(2) In the present disclosure, since there is no need for the positive and negative electrolyte, when circulated, to pass through the runner formed by the sealing rubber, the final compression forms of different cells are different as a result of uneven stress on the sealing rubber during encapsulation. However, the difference in these compression forms would not be passed to affect the flow of the electrolyte, so it would not lead to the unevenness of mobility of the electrolyte.
(3) The stack frame in the present disclosure is simple in design and easy to assemble. Also, the frame may be used not only as a frame of the bipolar plate and the graphite felts but also as a frame of the separator and the graphite felts. The frame is universal and is less liable to be wrongly assembled.

### BRIEF DESCRIPTION OF THE DRAWINGS

FIG. 1: a top view of the stack frame of the present disclosure.
FIG. 2: an instance of intersection of the electrolyte guiding groove and the sealing gasket groove in the stack frame of the present disclosure.
FIG. 3: an instance of intersection of the electrolyte guiding groove and the sealing gasket groove in the stack frame of the present disclosure.
FIG. 4: an instance of intersection of the electrolyte guiding groove and the sealing gasket groove in the stack frame of the present disclosure.

### DETAILED DESCRIPTION

Specific embodiments of the present disclosure will be illustrated below in detail. It should be noted that the illustration should not be regarded as a restrictive explanation as to the summary of the present disclosure herein. All of the technical solutions of the present disclosure are not limited to the following description, and any form that meets the technical features of the present disclosure and their equivalents falls within the scope of protection of the present disclosure.

### Material for Frame

The stack frame of the present disclosure is a stack frame made of a polymer material. The polymer material may be a single polymer material, or a mixture of two or more polymers.

The polymer may be one or more kinds selected from a polyolefin-based polymer, polyphenylene ether, polyimide, polyphenylene sulfide, polysulfone, polyester, polyaryletherketone, fluororesin, etc. Suitable polyolefin-based polymers may be homopolymers or copolymers of ethylene, propylene or α-olefin, in particular high-density polyethylene, low-density polyethylene, polypropylene, propylene-butene copolymer, and the like.

The stack frame may be made substantially of the aforementioned polymer, or may be made of a composite material formed by the aforementioned polymers and reinforced fibers. The reinforced fibers are not particularly limited. They may be selected from organic fibers or inorganic fibers, and the fibers may be continuous fibers or chopped fibers.

In addition, the stack frame may also be prepared from a mixture of the above-mentioned polymer and additional functional components. The other functional components include a filler, an antioxidant, a flame retardant, a stabilizer, various processing aids, etc.

The main function of the filler is to enhance the mechanical properties of a final stack frame. The suitable filler may be one or more kinds selected from silica, titanium dioxide, talc, mica, calcium carbonate, barium sulfate, and the like.

The antioxidant may be one or more kinds selected from amines, phenols, sulfur-containing compounds, phosphorus-containing compounds, and the like.

The flame retardant may be one or more kinds selected from a phosphorus-based flame retardant, a nitrogen-based flame retardant, a nitrogen-phosphorus synergistic flame retardant, a fluorinated flame retardant, and the like.

The stabilizer may be one or more kinds selected from a light stabilizer, a heat stabilizer, and the like.

The processing aids may be one or more kinds selected from a plasticizer, a lubricant, an impact modifier, etc.

The use of those additional functional components described above is not particularly limited as long as they are not reactive with electrolyte components, and an amount of each component with respect to the polymer resin may follow a conventional amount in this field.

Furthermore, a suitable method for preparing a stack frame includes injection molding, dip molding, etc., which may be integral molding or splicing molding.

As for the shape of the stack frame, the stack frame has a hollow structure in the present disclosure. The hollow structure means that the stack frame is an integral body formed by four borders having a certain edge width and a hollow structure is arranged inside the borders, which is used mainly for bearing the bipolar plate and the graphite felts or the separator and the graphite felts.

### Sealing Gasket Groove and Sealing Rubber

In the present disclosure, sealing rubber is used to form a sealing gasket disposed in the sealing gasket groove of the stack frame.

There is no particular limitation on the arrangement of the sealing gasket groove. In some embodiments, the sealing gasket groove may be arranged at the edges of the peripheral frame of the stack frame, such as the four corners and the peripheral edges of the frame, extending along the direction of the outer edge of the frame.

In addition, the types of sealing rubber suitable to the present disclosure may be various elastomers, specifically, olefin-based elastomers or silicon-containing elastomers or the like.

In the present disclosure, the sealing rubber provided in the sealing gasket groove may seal the interior of the stack frame by hard pressing when laminating or encapsulating a plurality of frames. There are no special requirements for the form of the sealing rubber used for sealing in the present disclosure as long as it may seal a stack.

In the present disclosure, as the sealing rubber is not in contact with the positive and negative electrolyte, the service life of the sealing rubber will be greatly extended. Also, as the circulation of the positive and negative electrode liquids is independent of the sealing rubber, even if the sealing rubber is unevenly stressed or deformed at the time of assembling the stack, this would not affect the flow of the electrode liquids in the stack frame.

### Structure of Stack Frame

The stack frame of the present disclosure has a certain outer shape. The specific shape of the outer shape is not limited but depends on actual conditions or needs. Moreover, the stack frame of the present disclosure has a hollow structure, in which a bipolar plate and graphite felts or a separator and graphite felts of the flow battery may be installed as required. As described above, the frame of the present disclosure is prepared from a polymer material with a certain rigidity, ensuring the stability of the bipolar plate, separator and graphite felts during the lamination of the frame structure, so that the inflow and outflow of electrolyte are more even and smooth.

In some embodiments of the present disclosure, the four borders forming a hollow structure of the stack frame include long borders and short borders, and preferably the width of the long borders is greater than or equal to that of the short borders.

The stack frame has an inlet and an outlet of electrolyte; an electrolyte guiding groove; and a sealing gasket groove. The electrolyte guiding groove communicates independently with the inlet and the outlet respectively, and allows the electrolyte to flow in or out of graphite felts on both sides of a bipolar plate or both sides of a separator via the electrolyte guiding groove, and the electrolyte guiding groove and the sealing gasket groove do not communicate with each other.

The sealing gasket groove is arranged on the borders of the stack frame. The specific arrangement of the gasket groove is not particularly limited and may refer to conventional arrangements in this field. During assembly, sealing rubber strips existing in the sealing gasket groove are capable of sealing the interior of the stack to prevent leakage of electrolyte.

The inlet and outlet of electrolyte allow for inflow and outflow of electrolyte. In some preferred embodiments of the present disclosure, it is possible to form through holes at the edges of the stack frame, preferably at four corners along the edges, to provide the inlet and the outlet. Such through holes may also play a role in positioning and assistance for assembly at the same time.

The inlet and outlet of the electrolyte are communicated with the electrolyte guiding groove of the stack frame, respectively. The electrolyte guiding groove is disposed on the peripheral border structure around the frame. In some preferred embodiments of the present disclosure, the guiding groove is disposed on two wider opposite borders in the frame structure, while the borders, on which no guiding groove is provided, in the frame may be set as narrower borders. This is conducive to increasing the internal space of the stack while ensuring the structural strength.

In some embodiments of the present disclosure, on one border of the stack frame, the guiding groove is connected to the through hole on the border, while the other end of the guiding groove is connected to the hollow portion inside the stack frame. The hollow portion is a reserved portion for installing a bipolar plate and graphite felts or a separator and graphite felts. The other border opposite to the aforesaid border also has the same structure. Such an arrangement ensures that the electrolyte may flow in from one border of the stack frame and flow out from the guiding groove on the other border after reacting with the graphite felt.

As set out previously, the electrolyte guiding groove and the sealing gasket groove of the present disclosure do not communicate with each other. In some embodiments of the present disclosure, the entire guiding groove portion from the above inlet or outlet through hole to one or more runner openings connected to the hollow portion inside the stack frame is physically separated from the sealing gasket groove, without an intersection. In such an embodiment, for example, the sealing gasket groove may be disposed on a more peripheral portion of the guiding groove portion. In this case, forming a guiding groove by a frame prepared from a polymer with a certain mechanical strength or rigidity not only can ensure no corrosion against the sealing rubber after long-term use of the flow battery, but would not result in an uneven structure due to undesirable assembly stress on the positive guiding groove during assembly.

In some other embodiments of the present disclosure, there is an intersection between the sealing gasket groove and the electrolyte guiding groove. For instance, at least part of the periphery of the sealing gasket groove is provided with a guiding groove. Under this circumstance, the sealing gasket groove may be provided in such a manner that it is cut off at the intersection, which may reduce the contact between the sealing gasket and the electrolyte in terms of the physical structure. However, the manner of cutting off the sealing gasket groove would cause concern about sealing property in some extreme cases. Therefore, in some other preferred embodiments of the present disclosure, a "tunnel" structure is provided at the intersection, that is, the electrolyte guiding groove is enabled to pass through a through structure at the lower portion of the sealing gasket groove, and both ends of the guiding groove are connected to the inlet or outlet through hole at the edge of the frame, and the runner opening leading to the hollow portion inside the frame, respectively. The "tunnel" structure may be a V-shaped structure or a U-shaped structure or any other structure that meets conditions for connection and communication. The aforementioned through structure may only be formed inside the frame. For example, when the guiding groove is fully present inside the stack frame, the guiding groove may directly pass below the intersection. The through structure may also be formed together with a groove structure on the surface of the corresponding area of an additional frame laminated on the lower portion of the frame when the stack is assembled. In this case, some frames of the present disclosure may form run-through openings on both sides of the above-mentioned intersection.

In some embodiments of the present disclosure, the electrolyte guiding groove is completely enclosed inside a stack frame of the present disclosure. As described above, when the guiding groove and the sealing gasket groove have an intersection or an intersection part, such an enclosed arrangement enables the guiding groove to be physically isolated from the sealing rubber as much as possible. In some other embodiments, the enclosed guiding groove may form continuous protruding structures on the surface of the frame. In some other embodiments, the above enclosed portion does not form a protruding structure.

Besides, in some other embodiments of the present disclosure, the electrolyte guiding groove is at least partially exposed to the surface of the stack frame, that is, at least part of the guiding groove is present inside the stack frame. In such a structure, the guiding groove exposed on the surface of the stack frame may be enclosed by virtue of another stack frame laminated on the stack frame during the assembly of a stack.

In the present disclosure, no matter whether the electrolyte guiding groove is completely enclosed in an individual stack frame, or part of the guiding groove is formed on the surface of the stack frame, as long as the guiding groove intersects with the sealing gasket groove, the "tunnel" through structure formed at the intersection may be formed only by the structure of the stack frame itself, or by the stack frame together with a stack frame adjacently laminated beneath it. In this case, it is evident that the lower stack frame is provided with a suitable structure at a corresponding position to form an integrated communication structure together with the structure of the stack at the intersection, so that the guiding groove of the stack frame may form a complete circulation channel below the intersection.

Furthermore, in the present disclosure, the two main surfaces, namely, the front side and the back side, of the stack frame are regarded as the main surfaces of the stack frame. Accordingly, the stack frame has two main surfaces -- the front side and the back side. In some embodiments of the present disclosure, one side of the stack frame to which the guiding groove is exposed may be regarded as the front side. In this case, the front side of the stack frame has the surface of the front side at least partially present in the stack frame. In some embodiments of the present disclosure, the front side of the frame may also have some protrusions. Preferably, the protrusions are provided on the portion, not in contact with the guiding groove, of the borders of the stack frame. The protrusions and the frame may be integrally formed with the borders, or the protrusions may be made of a sealing material. The protrusions are closely connected to the borders, and may have effects of securing the stack frame and sealing when the stack frame is assembled. In some embodiments of the present disclosure, the protrusions and the above sealing rubber may be made of the same material. Therefore, the front side of the stack frame in the present disclosure may have a sealing gasket groove, a guiding groove (inside the stack frame or partially exposed to the front surface of the stack frame), optionally the protrusions above, and the like.

On the back side of the stack frame, a sealing gasket groove may be provided as needed.

In some preferred embodiments of the present disclosure, the stack frame structure of the present disclosure has a horizontally and/or longitudinally symmetrical structure in outer shape. In some embodiments, the electrolyte guiding groove provided on one surface (at the front side) of the stack frame structure of the present disclosure has a symmetrical structure along with the horizontal and/or longitudinal directions of the surface. Further, in some other embodiments of the present disclosure, the electrolyte guiding groove, protrusions, a sealing gasket groove, and other optional structures provided on one surface (at the front side) of the stack frame structure of the present disclosure has a symmetrical structure along with the horizontal and/or longitudinal directions of the surface.

### Stack Frame Laminate

Besides, the present disclosure further relates to a stack frame laminate.

In the preferred embodiments of the present disclosure, two or more stack frames of the present disclosure are used to form a laminate. The stack frames of the present disclosure may be laminated in such a manner that the front sides face the same direction.

The stack frame of the present disclosure may be equipped with a bipolar plate and graphite felts, or may also be equipped with a separator and graphite felts therein. In some preferred embodiments, when assembling the stack frame equipped with a bipolar plate and graphite felts and the stack frame equipped with a separator and graphite felts, either of the two adjacent stack frames is laminated in parallel to the other by means of plane rotation of 180° (with the normal direction of the main surface of the frame as the axis). Therefore, the present disclosure provides a very simple method for assembling a flow battery stack, comprising: using the frame of the present disclosure, filling the hollow structure therein with a bipolar plate and graphite felts, or a separator and graphite felts, and then laminating them. The lamination will be carried out according to the above method, which may easily avoid the occurrence of assembly errors.

When carrying out the lamination, at the interface where the two frames meet, if the lower frame has a guiding groove present on the surface of the stack frame, the guiding groove would be enclosed by the upper frame. In addition, as described above, in some embodiments, the lower frame provides a corresponding guiding groove structure, which may form a "tunnel" structure together with the corresponding portion of the frame laminated thereon to allow for flow of electrolyte, so that the electrolyte flowing through the upper frame flows below its intersection with the sealing gasket groove, and enters the guiding groove provided in the upper frame again.

In a specific embodiment, if the guiding groove provided at the front side part of the stack frame is exposed to the surface, when the stack is assembled, the front side of a stack frame (frame B) overlapped with the frame (frame A) faces the same direction as the front side of frame A, wherein the back side of frame A is combined with the front side of frame B. At the same time, the back side of frame A has a corresponding structure capable of enclosing the electrolyte guiding groove on the surface of frame B. The frame A and the frame B meet the conditions described above in the present disclosure, that is, A may be exactly the same as B, while B is obtained by rotating A by 180° in the plane during assembly.

In other embodiments, if the sealing gasket groove (at the front side) of frame A and the electrolyte guiding groove have an intersection, and the guiding grooves on two side frames A at the intersection have through holes, a groove structure present at the corresponding position of the front side of an additional frame laminated under the frame A and the through holes on both sides of the intersection of the above frame A jointly form a through structure, such that the electrolyte circulating in the frame A flows back to the frame A via the through structure. In a preferred embodiment, the additional frame may be frame B. In this situation, an overlapping arrangement of a plurality of frames B/A/B/A ... is formed in fact to enclose the guiding groove of each frame.

Additionally, in another specific embodiment of the present disclosure, the electrolyte guiding groove is symmetrically distributed on the surfaces of two side frames on the surface of the front side of the stack frame. As described before, the two side frames may be wider in width and/or longer in length in the stack frame. On either side, the electrolyte guiding groove intersects with the sealing gasket groove present on the surface of this side. The electrolyte guiding groove includes a portion (a) connected to the inlet or the outlet, and a portion (b) not connected to the inlet or the outlet. In some cases, the portion (a) and/or the portion (b) are at least partially formed on the surface of this side of the stack frame.

On the surface of each side of the stack frame, the portion (a) intersects with the sealing gasket groove, and optionally the portion (b) does not intersect the sealing gasket groove. Through holes are provided on both sides of the intersection, such that the portion (a) is divided by the intersection into a portion (a1) and a portion (a2). Moreover, the portion (a1) and the portion (a2) are connected to the through holes provided on both sides of the intersection respectively, and the portion (a2) further communicates with graphite felts on both sides of the bipolar plate or the separator.

The distance between the through holes on both sides of the intersection matches the length of the portion (b). The matching used herein may be interpreted as the length of the portion (b) being equal to or slightly shorter than the distance between the two through holes. The length of the portion (b) should be a straight-line distance between a starting point and an ending point of the portion (b). In this sense, the shape or strike between the starting point and the ending point of the portion (b) is not particularly limited.

At this point, when two or more stack frames of the present disclosure are laminated and assembled in such a manner that their front sides face the same direction (here the upper and lower stack frames will be used for illustration), the upper frame has a portion (a) and a portion (b) of the electrolyte guiding groove completely formed on the surface of the front side of the stack frame. Moreover, the above-mentioned portion (a) and portion (b) do not communicate with each other, and have the same structural arrangement as described above. By using the front side of the lower frame as a reference, the upper frame is rotated in parallel by 180° in a plane and then laminated on the lower frame to form a laminate. At this time, the portion (a) at the front side of the lower frame is completely enclosed, and the portion (b) is connected to the through holes of the upper frame on both sides of the intersection.

The embodiments of the present disclosure will be illustrated below with reference to the specific drawings. It should be noted that the portions (including an electrolyte guiding groove, a sealing gasket groove, etc.) in the following drawings are all partially shown.

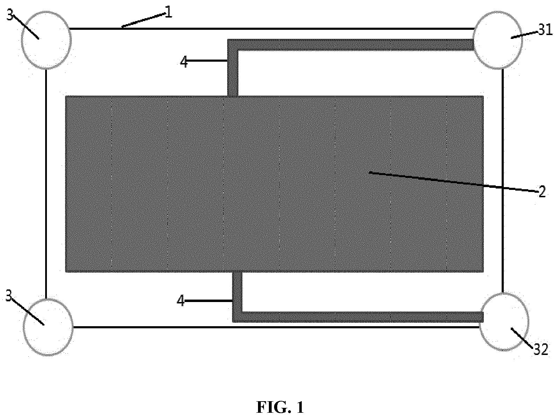

FIG. 1 shows a basic embodiment of the present disclosure, a stack frame 1 has a hollow portion 2, and the stack frame has a horizontally and/or longitudinally symmetrical structure. There are four through holes at four corners on one surface of frame 1. A through hole 31 is an inlet of electrolyte, and a through hole 32 is a corresponding outlet of electrolyte. An electrolyte guiding groove 4 is provided inside the stack frame 1, wherein one end of the guiding groove 4 communicates with the through hole 31 or 32, while the other end communicates with the hollow portion in the frame.

In the stack frame as shown in FIG. 1, the hollow portion may be equipped with a bipolar plate and graphite felts, or may also be equipped with a separator and graphite felts. In a preferred embodiment, in the hollow portion, the frame equipped with a bipolar plate and graphite felts and a stack frame equipped with a separator and graphite felts may be laminated.

In FIG. 1, there is also a sealing gasket groove 5 (not shown in FIG. 1) of the frame. The sealing gasket groove 5 may be arranged arbitrarily. In this case, when a stack is assembled, the sealing rubber in sealing gasket groove 5 is physically isolated from the electrolyte guiding groove 4 in the stack frame 1, and the electrolyte guiding groove 4 is present inside the stack frame 1 or at least partially present on the surface (of the front side) of the stack frame 1.

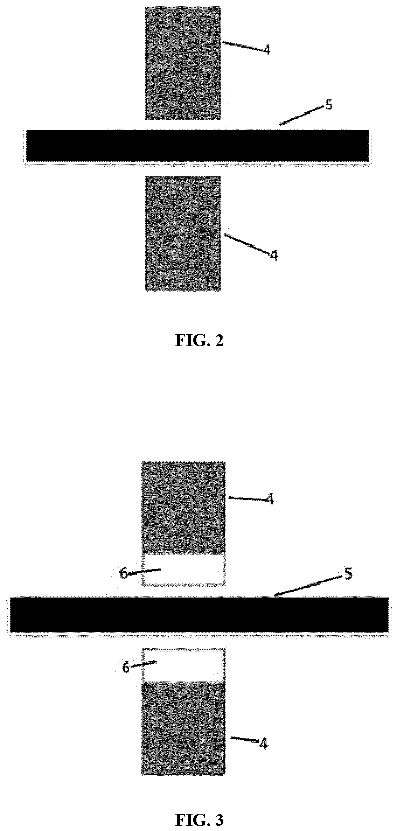

FIG. 2 (partial top view) shows another embodiment of the present disclosure. In this instance, the guiding groove 4 is present on the surface of the front side of stack frame 1 and exposed thereto. The sealing gasket groove 5 of the stack frame 1 intersects with the guiding groove 4, and the guiding groove 4 passes through the lower portion of sealing gasket groove 5 at the intersection.

FIG. 3 (partial top view) shows another embodiment of the present disclosure. In this case, the guiding groove 4 is present on the surface of the front side of the stack frame 1 and exposed thereto. The sealing gasket groove 5 of the stack frame 1 intersects with the guiding groove 4, and the guiding groove 4 has two run-through openings 6 on both sides of the intersection. By means of laminating stack frame 1 on other stack frames, the lower stack frame forms an arbitrary structure on the surface of a corresponding position, and is thus capable of forming a "tunnel" structure together with the above two run-through openings.

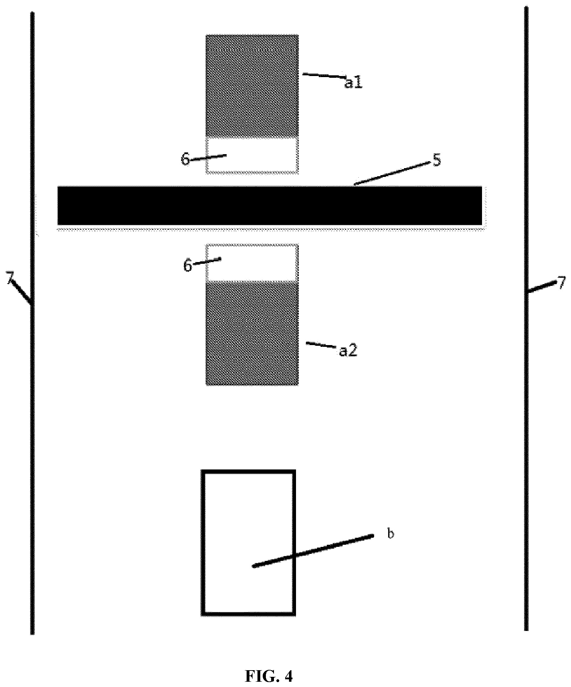

FIG. 4 (partial top view) shows another embodiment of the present disclosure. In this instance, the guiding groove (a) is present on the surface of the front side of the stack frame 1 and exposed thereto. The sealing gasket groove 5 of the stack frame 1 intersects with the guiding groove (a), so the guiding groove (a) may be divided into a portion (a1) and a portion (a2) (it should be noted that the guiding groove (a) including a portion (a1) and a portion (a2) is merely partially shown here), and the guiding groove (a) has two run-through openings 6 on both sides of the intersection. In the stack frame, there is also guiding groove (b) on the border at the same side with guiding groove (a). Also, 7 shown in FIG. 4 denotes an edge of the border on the front side of the stack frame.

In addition, the present disclosure further relates to a stack using the above stack frames or stack frame laminate of the present disclosure, and a flow battery using the stack.

### Industrial Applicability

The stack frames of the present disclosure may be used for the preparation or assembly of industrial flow batteries.

## Claims

1. A stack frame for a flow battery, wherein the stack frame is made of a polymer material and has a hollow structure, and an outer shape thereof has a horizontally and/or longitudinally symmetrical structure,
the stack frame has a front side and a back side, the surface of the front side has:
an inlet and an outlet of electrolyte;
an electrolyte guiding groove; and
a sealing gasket groove;
the electrolyte guiding groove and the sealing gasket groove do not communicate with each other, and the electrolyte guiding groove is at least partially exposed to the surface of the front side of the stack frame, and
the electrolyte guiding groove allows the electrolyte to flow in or out of graphite felts on both sides of a bipolar plate or both sides of a separator of the flow battery.

2. The stack frame according to claim 1, wherein the electrolyte guiding groove is symmetrically distributed on two side frames of the front side of the stack frame, and on either of the side frames, the electrolyte guiding groove includes a portion (a) connected to the inlet or the outlet, and a portion (b) not connected to the inlet or the outlet.

3. The stack frame according to claim 2, wherein on the surface of either of the side frames of the stack frame, the portion (a) intersects with the sealing gasket groove, and has through holes respectively on both sides of an intersection, so that the portion (a) is divided by the intersection into a portion (a1) and a portion (a2); and the portion (a1) and the portion (a2) are connected to the through holes on both sides of the intersection respectively, and the portion (a2) further communicates with graphite felts on both sides of the bipolar plate or both sides of the separator.

4. The stack frame according to claim 3, wherein the distance between the through holes on both sides of the intersection matches a length of the portion (b).

5. The stack frame according to any one of claims 1 to 4, wherein both the front side and the back side of the stack frame have a horizontally and/or longitudinally symmetrical structure relative to a center line.

6. The stack frame according to any one of claims 1 to 5, wherein the stack frame is a frame bearing the bipolar plate and the graphite felts or a frame bearing the separator and the graphite felts.

7. The stack frame according to any one of claims 1 to 6, wherein the stack frame only allows the electrolyte to flow in and out of graphite felts on both sides of the bipolar plate or both sides of the separator via the electrolyte guiding groove.

8. A stack frame laminate for a flow battery, wherein the stack frames according to any one of claims 1 to 7 are laminated by the following method in such a manner that the front sides face the same direction: using one of the stack frames as a reference, and laminating an additional stack frame by rotating it by 180° in a parallel manner.

9. A flow battery stack, comprising one or more stack frames according to any one of claims 1 to 7, or the stack frame laminate according to claim 8.

10. A flow battery, comprising the stack according to claim 9.
